Europäisches Patentamt

European Patent Office

Office européen des brevets

(19)

(11) Publication number: **0 156 651 B1**

# EUROPEAN PATENT SPECIFICATION

(12)

(45) Date of publication of patent specification: 27.03.91    (51) Int. Cl.⁵: **G11B 15/02, H03J 9/00, H04B 1/20**

(21) Application number: 85302214.3

(22) Date of filing: 29.03.85

(54) Remote control transmitter.

(30) Priority: 29.03.84 JP 47181/84 U

(43) Date of publication of application:
02.10.85 Bulletin 85/40

(45) Publication of the grant of the patent:
27.03.91 Bulletin 91/13

(84) Designated Contracting States:
DE FR GB

(56) References cited:
EP-A- 0 011 593
DE-A- 2 215 329
DE-A- 2 714 874
GB-A- 2 023 935
GB-A- 2 133 218

(73) Proprietor: **SHARP KABUSHIKI KAISHA**
**22-22 Nagaike-cho Abeno-ku**
**Osaka 545(JP)**

(72) Inventor: **Magara, Tatuyuki**
**3498 Ujiiemachi**
**Shioya-gun Tochigi-ken(JP)**

(74) Representative: **Wright, Peter David John et al**
**R.G.C. Jenkins & Co. 26 Caxton Street**
**London SW1H 0RJ(GB)**

## Description

### Background of the Invention

The present invention relates to a remote control transmitter for controlling an electronic appliance such as a television receiver or a video tape recorder.

Recently, composite electronic equipment composed of different kinds of electronic appliances has been developed. An example of such equipment is a video/television set, a combination of a television receiver and a video tape recorder. Remote control devices adapted for controlling the composite electronic equipment have also been developed.

From DE-A-27 14 874 a remote control transmitter is known which is provided with a plurality of push-button switches on both sides of the transmitter casing to effect multiple functions. A flange on the lower side of the transmitter protects the keys from being inadvertently pressed.

From GB-A-2 023 935 a switch is known which is covered by a flexible sheet. The switch is activated by pressing on the sheet.

### Summary of the Invention

An object of the present invention is to provide a novel remote control transmitter both sides of which are provided with operating sections respectively in such a manner to minimize the possibility of faulty operation in controlling a composite electronic equipment such as a combination of a television receiver and a video tape recorder, and whose lower side has a flat, uniform surface.

Such a transmitter is set out in claim 1.

In a remote control transmitter of an embodiment of the present invention, a first switch group having a plurality of exposed key tops is provided on one side of the transmitter, and a second switch group covered with a flexible sheet is provided on the other side of the transmitter. Accordingly, any desired switch in the first switch group can be set on or off by depressing the corresponding key top, thus facilitating the remote control operation of the electronic equipment. Moreover, according to this embodiment, even if the key top of a switch in the first switch group is depressed with the transmitter placed on a table, the second switch group can never by actuated for faulty operation due to the flexible sheet cover. In addition, a desired switch in the second switch group can be set on or off by depressing the predetermined corresponding position on the sheet, as required for effecting different remote control operation of the electronic equipment.

### Brief Description of the Drawings

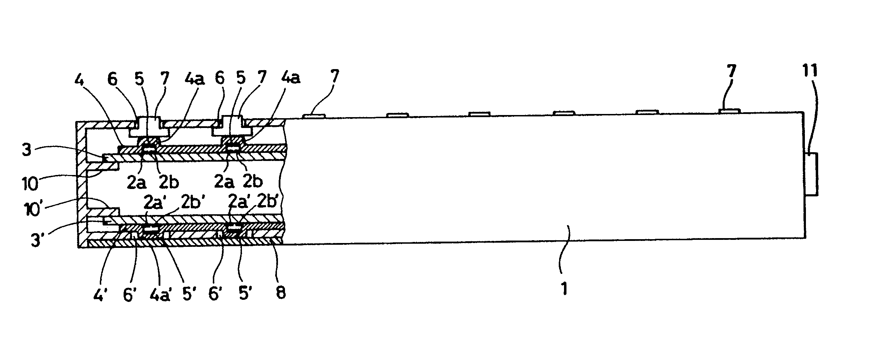

The present invention will be better understood from the detailed description given hereinbelow and the accompanying drawing which is given by way of illustration only, and this is not limitative of the present invention and wherein: The drawing is a partially broken side sectional view of the remote control transmitter of an embodiment of the present invention.

### Detailed Description of the Invention

The present invention will be described in detail below with reference to the drawing showing an example of the present invention. Similar to the usual remote control transmitter casing, a transmitter casing 1 contains a transmitting decoder circuit, a luminous element and a battery (which are not shown). Two substrates 3 and 3' are arranged in parallel with each other within the casing 1. Each substrate 3 or 3' contains a plurality of printed-wired contacts 2a and 2b or 2a' and 2b'. An elastic mat 4 or 4' made of resilient material such as rubber is superposed on the substrate 3 or 3'. The elastic mat 4 or 4' has recesses 4a or 4a' at the position corresponding to the contacts 2a and 2b or 2a' and 2b' on the substrate 3 or 3'. A short bar 5 or 5' made of conductive material such as carbon is mounted on the bottom of each recess 4a or 4a'. Through holes 6, 6 ... are provided in the upper wall of the casing 1 at positions corresponding to the recesses 4a, 4a ... in the elastic mat 4, a plurality of ⊓ -shaped key tops 7,7 ... projecting into the through holes 6,6 ... from inside. The key tops 7, 7 ... are always pressed outwardly by the resiliency of the elastic mats 4a, 4a ... so that the key tops 7, 7 ... partially protrude from the upper surface of the casing 1. Thus, the substrate 3a having the printed-wired contacts 2a and 2b, the elastic mat 4 having the recess 4a with the short bar 5 mounted on the bottom and the key top 7 define the first switch group.

The lower wall of the casing 1 is also provided with through holes 6, 6' ... at positions corresponding to recesses 4a', 4a' ... in the elastic mat 4'. A flexible sheet 8 is attached on the lower side of the transmitter, covering the elastic mat 4' and closing the through holes 6', 6' ... Thus, the substrate 3', the elastic mat 4' and the sheet 8 define the second switch group.

In the remote control transmitter of the above mentioned construction, switches operated with relatively high frequency or, for example, channel select switches for a television receiver in the case of the remote control transmitter for a video/television set are arranged in the first switch group, and switches operated with relatively low frequency or, for example, mode select switches for a video tape recorder are arranged in the second switch group.

As mentioned above, the remote control transmitter of the present invention contains the first switch group on one side of the transmitter casing with the plurality of key tops protruding from the surface, and the second switch group covered with the flexible sheet on the other side of the casing. Thus, the electronic equipment can be easily and accurately controlled from a remote position by depressing any desired key top for on/off operation of the corresponding switch in the first switch group, without erroneously actuating the second switch group even if the transmitter is operated on a table. Moreover, it is possible to conduct different remote control operation of the electronic equipment, as required, by depressing the predetermined position on the flexible sheet for on/off operation of a desired switch in the second switch group.

The substrates 3 and 3' are fixed in place by substrate set plates 10 and 10'. Signals from the remote control transmitter are transmitted through a signal emitting section 11 to the equipment under control.

The remote control transmitter of the present invention can be used for a wide range of electronic equipment including a television receiver, a video tape recorder, a stereo set and a compact disc.

## Claims

1. A remote control transmitter comprising:
   a first switch group having a plurality of key tops (7) protruding from one side of the transmitter casing; and
   a second switch group having a plurality of nonprotruding keys (4a') provided on an opposite side of the transmitter casing, said non-protruding keys being covered with a flexible sheet (8) defining the outermost face of the casing which will contact a flat support surface such as a table top when the transmitter is placed thereon with the one side of the casing uppermost, said non-protruding keys being operable by pressing on said flexible sheet.

2. A remote control transmitter according to claim 1 wherein said first and second switch groups each include:
   a substrate (3;3') supported fixedly within the casing adjacent said one or opposite side, respectively, and having switch contacts (2a,2b;2a',2b') for the respective switches, and
   an elastic member (4;4') overlying the substrate and formed at the positions of said key tops (7) and keys (4a') respectively with recessed portions (4a;4a') over the respective switch contacts (2a,2b;2a',2b'), said recesses accommodating respective electrically conductive contact bars (5,5') facing said switch contacts and wherein pressure applied to said recessed portions of said elastic members by way of said key tops or through said flexible sheet produces switching contact between the contact bars and the respective switch contacts.

3. A remote control transmitter according to claim 1 or claim 2 wherein said casing has respective first and second opposed casing walls at said one and opposite sides thereof, the first wall being provided with first apertures (6) through which said key tops (7) protrude, and the second wall being provided with second apertures (6') in which said non-protruding keys (4a') are located, said flexible sheet (8) being attached to the outer face of said second wall to close over the second apertures (6').

## Revendications

1. Emetteur à télécommande comprenant :
   un premier groupe de commutateurs comportant une multiplicité de têtes de touches (7) faisant saillie à partir d'un premier côté du boîtier de l'émetteur; et
   un second groupe de commutateurs comportant une multiplicité de touches (4a') non saillantes, prévues sur un côté opposé du boîtier de l'émetteur, lesdites touches non saillantes étant couvertes d'une feuille flexible (8) définissant la face le plus à l'extérieur du boîtier qui viendra au contact d'une surface de support plate telle qu'un dessus de table lorsque l'émmetteur est placé sur cette dernière, le premier côté du boîtier étant orienté vers le haut, lesdites touches non saillantes étant actionnées par enfoncement de ladite feuille flexible.

2. Emetteur à télécommande selon la revendication 1, dans lequel lesdits premier et second groupes de commutateurs comportent chacun:
   un substrat (3;3') maintenu et assujetti à l'intérieur du boîtier au voisinage dudit premier côté ou dudit côté opposé, respectivement, et comportant des contacts de commutation (2a,2b;2a',2b') pour les commutateurs respectifs, et

un élément élastique (4;4') couvrant le substrat et formé aux emplacements desdites têtes de touches (7) et touches (4a') respectivement, des parties évidées (4a;4a') étant prévues au-dessus des contacts de commutateur respectifs (2a,2b;2a',2b'), lesdits évidements recevant des barres de contact électriquement conductrices respectives (5,5') en regard desdits contacts de commutation, et dans lequel la pression appliquée auxdites parties évidées desdits éléments élastiques à l'aide desdites têtes de touches ou par l'intermédiaire de ladite feuille flexible entraîne un contact de commutation entre les barres de contact et les contacts de commutation respectifs.

3. Emmetteur à télécommande selon la revendication 1 ou la revendication 2, dans lequel ledit boîtier comporte des première et seconde parois de boîtier opposées respectives au niveau de son dit premier côté et de son dit côté opposé, la première paroi étant munie de premières ouvertures (6) à travers lesquelles lesdites têtes de touches (7) font saillie, et la seconde paroi étant munie de secondes ouvertures (6') dans lesquelles sont situées lesdites touches non saillantes (4a'), ladite feuille flexible (8) étant fixée à la face externe de ladite seconde paroi de façon à refermer les secondes ouvertures (6').

## Ansprüche

1. Fernsteuersender mit
   - einer ersten Schaltergruppe, die eine Mehrzahl von Tastenköpfen (7) aufweist, die an einer Seite aus dem Sendergehäuse herausragen, und
   - einer zweiten Schaltergruppe, die eine Mehrzahl von nicht herausragenden Tasten(4a') aufweist, die an der gegenüberliegenden Seite des Sendergehäuses angeordnet sind, wobei die nicht herausragenden Tasten mit einer flexiblen Schicht (8) abgedeckt sind, die die Außenfläche des Gehäuses bildet und in Kontakt mit einer flachen Trägerfläche, z.B. einer Tischoberfläche bringbar ist, wenn der Sender darauf mit der genannten einen Seite nach oben positioniert wird, und wobei die nicht herausragenden Tasten ferner durch Drücken der flexiblen Schicht betätigbar sind.

2. Fernsteuersender nach Anspruch 1, **dadurch gekennzeichnet,** daß die erste und die zweite Schaltergruppe jeweils enthalten:
   - ein Substrat (3,3'), das jeweils benachbart zu der genannten einen oder gegenüberliegenden Seite innerhalb des Gehäuses fest angeordnet ist, und das Schaltkontakte (2a, 2b; 2a', 2b')für die jeweiligen Schalter aufweist, und
   - eine elastisches Element (4:4'), das das Substrat überdeckt und jeweils an den Positionen der Tastenköpfe(7) und Tasten(4a') mit ausgenommenen Bereichen (4a; 4a') oberhalb der jeweiligen Schaltkontakte (2a,2b; 2a',2b) versehen ist, wobei die Ausnehmungen jeweils elektrisch leitende Kontaktstücke (5,5') aufnehmen, die den Schaltkontakten zugewandt sind, und wobei durch Druckeinwirkung auf die ausgenommenen Bereiche des elastischen Elements über die Tastenköpfe oder über die flexible Schicht ein Kontakt zwischen den Kontaktstücken und den jeweiligen Schaltkontakten herstellbar ist.

3. Fernsteuersender nach Anspruch 1 oder 2, **dadurch gekennzeichnet,** daß das Gehäuse jeweils eine erste und eine gegenüberliegende zweite Gehäusewand an der einen und der gegenüberliegenden Seite aufweist, die erste Wand mit ersten Öffnungen (6) ausgestattet ist, durch die die Tastenköpfe (7) herausragen und die zweite Wand mit zweiten Öffnungen (6') versehen ist, in denen die nicht herausragenden Tasten (4a') angeordnet sind, wobei die flexible Schicht (8) an der äußeren Fläche der zweiten Wand angeordnet ist, um die zweiten Öffnungen (6') zu verschließen.

EP 0 156 651 B1

4  6  5  7  4a  6  5  7  4a  7  7  11

3

10

10'

3'

2a 2b    2a 2b

2a' 2b'   2a' 2b'

4'  6'  4a'  5'  6'  5'  8

1